# EUROPÄISCHE PATENTSCHRIFT

(11) **EP 0 911 369 B1**
(45) Veröffentlichungstag und Bekanntmachung des Hinweises auf die Patenterteilung: **17.07.2002**
(21) Anmeldenummer: 98118977.2
(22) Anmeldetag: 07.10.1998
(51) Int. Cl.: C09C 1/24, C01G 49/06

(54) **Eisenoxidrotpigmente, Verfahren zur Herstellung von Eisenoxidrotpigmenten und deren Verwendung**
Red iron oxide pigments, process for its preparation and its use
Pigments d'oxyde de fer rouge, procédé pour leur préparation et leur utilisation

(30) Priorität: 20.10.1997 DE 19746262
(43) Veröffentlichungstag der Anmeldung: 28.04.1999
(73) Patentinhaber: BAYER AG, 51368 Leverkusen (DE)
(72) Erfinder: Braun, Rolf-Michael, Dr., 47802 Krefeld (DE); Bayer, Eckhard, Dr., 47807 Krefeld (DE); Meisen, Ulrich, Dr., 47829 Krefeld (DE)

(56) Entgegenhaltungen:
- EP-A- 0 691 307
- LU-A- 85 265
- US-A- 4 382 822
- CHEMICAL ABSTRACTS, vol. 113, no. 6, 6. August 1990 Columbus, Ohio, US; abstract no. 44190, XP002091502 & CN 1 033 786 A (HONGDU STEELWORK)

## Beschreibung

Die vorliegende Erfindung betrifft Eisenoxidrotpigmente, ein Verfahren zur Herstellung von Eisenoxidrotpigmenten durch Kalzinierung von Eisenoxidgelbpigmenten oder Eisenoxidschwarzpigmenten sowie deren Verwendung.

Fällungsverfahren zur Herstellung von Eisenoxiden sind seit langem bekannt. Der typische Verlauf dieser Verfahren ist beispielsweise in Ullmanns Enzyklopädie der technischen Chemie, Auflage 5, Band A 20, Seiten 297 ff. beschrieben. Als Rohstoff wird gewöhnlich Eisen-II-sulfat, das beim Abbeizen von Stahlblechen anfällt, oder auch Eisen-II-sulfat, das bei der Produktion von Titandioxid nach dem Sulfatverfahren anfällt, verwendet.

In der Beizereiindustrie ist seit Jahren ein verstärkter Trend zum Einsatz von Salzsäure als Beizmittel zu beobachten, so daß hier große Mengen an FeCl₂ anfallen. Weiterhin wird zur Herstellung von Titandioxid weltweit verstärkt das sogenannte Chloridverfahren angewendet. Bei der Herstellung von synthetischem Rutil für die TiO₂-Herstellung fallen große Mengen an FeCl₂ an. Aus diesen Verfahren fallen also verstärkt Eisen-II-chlorid enthaltende Lösungen an, die möglichst zu einem Wertstoff umgearbeitet werden sollen.

Ein gängiges Verfahren zur Verwertung von FeCl₂-Abfallösungen ist das Sprühröstverfahren, bei dem Eisen-II-chlorid oder auch Eisen-III-chlorid bei hohen Temperaturen (typischerweise bei mehr als 1 000°C) einer oxidativen Hydrolyse unterworfen wird. Als Endprodukte entstehen hier Eisenoxide, typischerweise Hämatit, und Salzsäure, die ebenfalls als Wertstoff wieder z.B. in den Beizereiprozeß zurückgeführt werden kann. Es wird hierbei ohne besondere Reinigungsschritte ein Eisenoxid erhalten, das in der Regel zur Herstellung von Hartferriten geeignet ist. Sollen aus derartig erhaltenen Eisenoxiden Weichferrite hergestellt werden, so muß die verwendete Eisenchloridlösung vorher zusätzlichen Reinigungsoperationen unterworfen werden, wodurch das Verfahren deutlich verteuert wird. Da immer mehr Eisenchlorid, großenteils minderer Qualität, anfällt und die Aufnahmefähigkeit des Ferritmarktes begrenzt ist, wird eine Alternative zur Herstellung eines Wertstoffes aus diesen Eisenchloriden gesucht. Eine direkte Deponierung oder Verklappung der Eisenchloridlösungen ist aus ökologischen Gründen nicht möglich.

Aufgabe der vorliegenden Erfindung war es daher, ein Verfahren zur Verfügung zu stellen, das es gestattet, Eisenchloridlösungen auf kostengünstige und möglichst einfache Weise in hochwertige Wertstoffe umzuwandeln.

Diese Aufgabe konnte durch die erfindungsgemäßen Eisenoxidrotpigmente und das erfindungsgemäße Verfahren gelöst werden.

Gegenstand der Erfindung sind Eisenoxidrotpigmente mit einer Helligkeit L* (im Purton) von 36,0 bis 44,0 CIELAB-Einheiten, einem a*-Wert von 24 bis 30 CIELAB-Einheiten und einem b*-Wert von 14 bis 26 CIELAB-Einheiten und mit einer Helligkeit L* (in der Aufhellung) von 59 bis 66 CIELAB-Einheiten und einem a*-Wert von 18 bis 30 CIELAB-Einheiten und einem b*-Wert von 4 bis 26 CIELAB-Einheiten und mit einem Mn-Gehalt von 0,012 bis 0,12 Gew.-%, bezogen auf Pigment, einem Chlorid-Gehalt von 0,05 bis 0,59 Gew.-%, bezogen auf Pigment, und einem Chrom-Gehalt von kleiner 40 mg/kg Pigment.

Ein weiterer Gegenstand der Erfindung ist ein Verfahren zur Herstellung von Eisenoxidrotpigmenten durch Kalzination von Eisenoxidgelbpigmenten bei Temperaturen von 350 bis 1 000°C, bevorzugt von 600 bis 900°C, in Gegenwart eines sauerstoffhaltigen Gases und gegebenenfalls durch anschließende Mahlung, dadurch gekennzeichnet, daß das Eisenoxidgelbpigment folgendermaßen hergestellt wurde, daß
a) zu einer sauren Fe-II-chloridlösung mit einem FeCl₂-Gehalt von 50 bis 450 g/l eine alkalische Komponente unter intensivem Rühren in einer Menge zugegeben wird, die ausreicht, um den pH-Wert der Lösung zwischen 3 und 5 einzustellen,
b) gegebenenfalls zusätzlich ein Flockungshilfsmittel vor oder nach der Zugabe der alkalischen Komponente oder gemeinsam mit der alkalischen Komponente der Lösung zugegeben wird,
c) gegebenenfalls nach der Zugabe der alkalischen Komponente und des gegebenenfalls zugesetzten Flockungshilfsmittels oxidiert wird,
d) der nach der Behandlung unter a) bis c) anfallende Feststoff von der Lösung abgetrennt wird,
e) die unter d) angefallene Lösung zu einer nach dem Fällverfahren hergestellten α- oder β-FeOOH-Keimsuspension zugegeben wird und zwar in einer Menge, die der 4- bis 8-fachen molaren Menge an Eisen der gesamten Keimsuspension (also Eisen aus Eisenoxidhydroxid und Eisen aus nicht umgesetzter Eisenverbindung) entspricht,
f) die unter e) angefallene Suspension auf eine Temperatur von 30 bis 95°C, bevorzugt von 30 bis 85°C, besonders bevorzugt von 55 bis 75°C, unter guter Durchmischung aufgeheizt wird,
g) anschließend mit einem Oxidationsmittel oxidiert wird, wobei das Oxidationsmittel so zugegeben wird, daß 0,5 bis 10 mol-% Eisen pro Stunde, bevorzugt 0,5 bis 2,0 mol-% Eisen pro Stunde, oxidiert werden und gleichzeitig der pH-Wert mit einer alkalischen Komponente mit einer Geschwindigkeit von 0,01 bis 0,4 pH-Werteinheiten/Stunde auf einem End-pH-Wert von 3,0 bis 5,0 erhöht wird,
h) gegebenenfalls bei konstantem pH-Wert zwischen 3,0 und 5,0 weiter oxidiert wird,
i) die Oxidation beendet wird, sobald der Fe-II-Gehalt der Suspension kleiner als 1 mol-% ist,
j) abschließend der Feststoff aus i) abgetrennt, gewaschen, getrocknet und gemahlen wird.

Ein weiterer Gegenstand der Erfindung ist ein Verfahren zur Herstellung von Eisenoxidrotpigmenten durch Kalzination von Eisenoxidschwarzpigmenten bei Temperaturen von 350 bis 1 000°C, bevorzugt von 600 bis 900°C, in Gegenwart eines sauerstoffhaltigen Gases und gegebenenfalls durch anschließende Mahlung, dadurch gekennzeichnet, daß das Eisenoxidschwarzpigment folgendermaßen hergestellt wurde, daß
a) zu einer sauren Fe-II-chloridlösung mit einem FeCl₂-Gehalt von 50 bis 450 g/l eine alkalische Komponente unter intensivem Rühren in einer Menge zugegeben wird, die ausreicht, um den pH-Wert der Lösung zwischen 3 und 5 einzustellen,
b) gegebenenfalls zusätzlich ein Flockungshilfsmittel vor oder nach der Zugabe der alkalischen Komponente oder gemeinsam mit der alkalischen Komponente der Lösung zugegeben wird,
c) gegebenenfalls nach der Zugabe der alkalischen Komponente und des gegebenenfalls zugesetzten Flockungshilfsmittels oxidiert wird,
d) der nach der Behandlung unter a) bis c) anfallende Feststoff von der Lösung abgetrennt wird,
e) die unter d) angefallene Lösung zu einer Lösung, die ein alkalisch reagierendes Fällungsmittel enthält, bei einer Temperatur von 50 bis 95°C, in einer Menge zugegeben wird, so daß das Äquivalentverhältnis von Eisen-II zu Fällungsmittel 0,5 bis 0,65, bevorzugt 0,5 bis 0,58, beträgt,
f) anschließend mit einem Oxidationsmittel oxidiert wird,
g) die Oxidation beendet wird, sobald der Fe-II-Gehalt der unter f) erhaltenen Suspension kleiner als 1 mol-% ist,
h) anschließend der Feststoff aus g) abgetrennt, gewaschen und getrocknet wird.

Bevorzugt werden als alkalische Komponente bzw. als alkalisch reagierendes Fällungsmittel Natronlauge, Natriumcarbonat, Magnesiumcarbonat, Magnesiumoxid, Magnesiumhydroxid, Calciumoxid, Calciumhydroxid oder Ammoniak eingesetzt.

Es können Eisen-II-chloridlösungen aus Stahlbeizen oder auch Eisen-II-chloridlösungen aus der TiO₂-Produktion nach dem Chloridverfahren eingesetzt werden.

Die beim erfindungsgemäßen Verfahren als Zwischenprodukte erhaltenen Eisenoxidgelbpigmente bzw. Eisenoxidschwarzpigmente weisen Mangangehalte von 0,011 bis 0,11 Gew.-%, bezogen auf Pigment und Chloridgehalte von 0,07 bis 0,7 Gew.-%, bezogen auf Pigment sowie Chromgehalte von 5 bis 40 mg/kg, bezogen auf Pigment, auf.

Bei der erfindungsgemäßen Herstellung von Eisenoxidrot über Eisenoxidschwarz ist es vorteilhaft ein Äquivalenz-Verhältnis von Eisen-II zu Fällungsmittel von 0,5 bis 0,65 einzuhalten.

Im Anschluß an die Kalzinierung ist in der Regel eine Mahlung zweckmäßig. Die Mahlung wird bevorzugt mit einer Strahlmühle, einer Pendelmühle, einer Walzenmühle, einem Attritor, mit einer Prallmühle oder mit einer Perlmühle durchgeführt. Besonders bevorzugt wird eine Trockenmahlung unter Zusatz eines Mahlhilfsmittels durchgeführt.

Das erfindungsgemäße Verfahren kann vorteilhaft folgendermaßen durchgeführt werden:

Zu einer Eisen-II-chloridlösung mit einem FeCl₂-Gehalt zwischen 50 und 450 g/l wird unter intensivem Rühren soviel Natronlauge zugegeben, daß sich ein pH-Wert von 3 bis 5 einstellt. Anstelle der Natronlauge kann auch eine andere alkalische Komponente, wie z.B. Ca(OH)₂, Na₂CO₃ oder Ammoniak etc., verwendet werden. Weiterhin kann das Sedimentationsverhalten des anfallenden Hydroxid- oder Carbonatschlamms durch Zugabe eines Flockungshilfsmittels verbessert werden. Es können die bekannten Flockungshilfsmittel, wie z.B. Polyacrylate oder andere ähnlich wirkende Stoffe, eingesetzt werden. Zur Verbesserung des Absetzverhaltens kann gegebenenfalls zusätzlich eine anschließende Oxidation erfolgen. Diese kann zudem bewirken, daß verschiedene Metallkationen in höherwertige Oxide oder Oxyhydroxide übergehen, die leichter abtrennbar sind.

Die Abtrennung des angefallenen Hydroxid- oder Carbonatschlamms kann durch Sedimentation, Filtration oder Trennung mit einem Separator erfolgen. Die optimale Auswahl des geeigneten Apparats bzw. der geeigneten Methode hängt von den genauen Versuchsbedingungen, den Mengenströmen und den eingesetzten Rohstoffen ab.

### Herstellung von Eisenoxidgelb

Zu einer nach dem Fällungsverfahren hergestellten α- oder β-FeOOH-Keimsuspension, in der die Keime bevorzugt eine BET-Oberfläche von 50 bis 70 m²/g aufweisen, wird die oben hergestellte Eisen-II-chloridlösung in einer Menge, die der 4 bis 30-fachen molaren Menge an Eisen des gesamten Keims (also Eisenoxidhydroxid und nicht umgesetztes FeCl₂) entspricht, zugesetzt. Die erhaltene Suspension wird vorzugsweise unter Rühren auf eine Temperatur zwischen 30 und 95°C, bevorzugt zwischen 30 und 85°C, besonders bevorzugt zwischen 55 und 75°C, gebracht. Nach Erreichen dieser Temperatur wird mit einem Oxidationsmittel oxidiert und gleichzeitig der pH-Wert mit einer Geschwindigkeit von 0,01 bis 0,4 pH-Werteinheiten/Stunde auf einen End-pH-Wert von 3,0 bis 5,0 gesteigert. Die Oxidationsgeschwindigkeit, die von der Zugabegeschwindigkeit des Oxidationsmittels, der Temperatur, der Durchmischung im Behälter und vom pH-Wert abhängt, sollte vorzugsweise zwischen 0,5 und 10 mol-% Eisen pro Stunde, besonders bevorzugt zwischen 0,5 und 2,0 mol-% Eisen pro Stunde liegen. Liegt die Oxidationsgeschwindigkeit wesentlich unter dem unteren Grenzwert, so wird das Verfahren unwirtschaftlich; liegt die Oxidationsgeschwindigkeit sehr deutlich über dem oberen Grenzwert, so führt das zu einer uneinheitlichen Teilchengröße.

Die Aufarbeitung der Pigmentsuspension erfolgt durch die bekannten Schritte Filtration, Trocknung und Mahlung.

Bei der Pigmentherstellung können vorzugsweise auch Modifikatoren zugesetzt werden, die die Teilchenform und Teilchengrößenverteilung steuern. Hier sind insbesondere Aluminium, Zink und Phosphat zu nennen. Es können jedoch auch organische Modifikatoren wie aliphatische Amine, Hydroxycarbonsäuren, aliphatische Alkohole oder Carbonsäuren oder deren Derivate eingesetzt werden.

Als Oxidationsmittel können beispielsweise eingesetzt werden:
- Luftsauerstoff
- reiner Sauerstoff
- Ozon
- H₂O₂
- Natriumhypochlorit oder Chlorlauge oder Calciumhypochlorit
- Chlorite oder Chlorate
- Perchlorate
- Nitrate
- Chlor

Die Oxidation wird bevorzugt beendet, sobald der Fe-II-Gehalt der Suspension kleiner als 1 mol-% ist. Eine weitergehende Oxidation bis zur vollständigen Umsetzung kann durchgeführt werden.

Neben dem Einsatz von Eisen-II-chloridlösungen können auch Mischungen aus Eisen-II-chlorid- und Eisen-II-sulfatlösungen sowohl bei der Keimherstellung als auch bei der Pigmentherstellung eingesetzt werden. Die bevorzugte Ausführungsform ist jedoch der ausschließliche Einsatz von Eisen-II-chloridlösungen. Es können auch z.B. bei der TiO₂-Produktion nach dem Chlorid-Verfahren anfallende Eisen-IIIchloride verwendet werden, wenn sie vorher mit metallischem Eisen zu Eisen-II-chlorid reduziert worden sind.

Die erhaltene Suspension, die das ausgefällte Eisenoxidgelbpigment enthält, wird filtriert, gewaschen, getrocknet und gemahlen. Der abfiltrierte Feststoff bei Temperaturen von 350 bis 1000°C, bevorzugt von 600 bis 900°C, in Gegenwart von sauerstoffhaltigen Gasen kalziniert und danach gegebenenfalls gemahlen.

### Herstellung von Eisenoxidschwarz

Zu einer Lösung, die ein alkalisch reagierendes Fällungsmittel enthält, wird soviel der oben hergestellten Eisen-II-chloridlösung gegeben, daß das Äquivalentverhältnis Eisen-II zu Fällungsmittel 0,5 bis 0,65, besonders bevorzugt 0,5 bis 0,58 beträgt. Wird also beispielsweise als Fällungsmittel NaOH eingesetzt, so können auf 100 mol NaOH zwischen 50 und 65 mol FeCl₂ eingesetzt werden. Bei Verwendung von K₂CO₃ als Fällungsmittel werden auf 100 mol K₂CO₃ zwischen 100 und 130 mol FeCl₂ eingesetzt. Zu der alkalischen Komponente wird also die berechnete Menge an vorbehandelter Eisen-II-chloridlösung bei einer Temperatur zwischen 50 und 95°C, vorzugsweise 70 bis 95°C, zugepumpt. Anschließend wird mit einem Oxidationsmittel oxidiert. Hierbei können die bei der oben beschriebenen Eisenoxidgelbherstellung bereits aufgeführten Oxidationsmittel verwendet werden. Die Oxidation wird beendet, sobald der Fe-II-Gehalt der Suspension kleiner als 1 mol-% ist. Eine weitergehende Oxidation bis zur vollständigen Umsetzung ist unwirtschaftlich, kann aber durchaus durchgeführt werden. Die erhaltene Suspension wird filtriert, gewaschen, getrocknet und gemahlen.

Auch hier kann die Eisen-II-chloridlösung teilweise durch Eisen-II-sulfatlösung ersetzt werden. Die bevorzugte Ausführungsform ist jedoch der ausschließliche Einsatz von Eisen-II-chloridlösung. Es ist auch möglich, bei der TiO₂-Produktion nach dem Chlorid-Verfahren anfallendes Eisen-III-chlorid einzusetzen, wenn dieses vorher mit metallischem Eisen zu Eisen-II-chlorid reduziert worden ist.

Die Herstellung des erfindungsgemäßen Eisenoxidrotpigmentes erfolgt dann durch Kalzinierung des nach den oben beschriebenen Verfahren hergestellten α-FeOOH oder Fe₃O₄. Die Kalzinierung erfolgt bei Temperaturen zwischen 350 und 1000°C, besonders bevorzugt bei 600 bis 900°C in Gegenwart eines sauerstoffhaltigen Gases.

Die Durchführung des erfindungsgemäßen Verfahrens ist nicht an die Verwendung eines bestimmten Ofentyps gebunden. Die Kalzinierung kann beispielsweise in einem Wirbelschichtofen, einem Kammerofen oder einem Drehrohrofen erfolgen. Die entsprechenden erforderlichen Verweilzeiten sind dem verwendeten Ofen anzupassen.

Im Anschluß an die Kalzinierung ist in der Regel, besonders aber bei Temperaturen von mehr als 600°C, eine Mahlung angebracht.

Aus wirtschaftlichen Gründen wird bevorzugt eine Trockenmahlung unter Zusatz eines üblichen Mahlhilfsmittels (z.B. Amine, Alkohole, Polyacrylate) durchgeführt. Es kann ein breites Spektrum von Mühlen eingesetzt werden. Strahlmühlen, Prallmühlen, Perlmühlen, Pendelmühlen, Walzenmühlen und Attritoren sind zur Mahlung der erfindungsgemäßen Rotpigmente besonders geeignet.

Die erfindungsgemäßen Eisenoxidrotpigmente bzw. die erfindungsgemäß hergestellten Eisenoxidrotpigmente werden zur Einfärbung von Baustoffen, Kunststoffen, Papier und Lacken, zur Herstellung von Farbmittelzubereitungen, zur Herstellung von Farbmitteln für die Lebensmittelindustrie und als Katalysatoren eingesetzt.

Die in den folgenden Beispielen aufgeführten Teile und Prozente beziehen sich auf das Gewicht, soweit nicht anders vermerkt.

Die Bestimmung des Farbtons erfolgt nach unten aufgeführter Vorschrift.

### 1. Präparation in einem Alkydharzlack zur Messung des Purtons

| | | | |
|---|---|---|---|
| Pigmenteinwaagen: | Fe-Rot | (Hämatit) | 1,00 g |
| | Fe-Gelb | (Goethit) | 0,80 g |
| | Fe-Schwarz | (Magnetit) | 1,00 g |

Das Pigment wird mit einer Teller-Farbenausreibmaschine (Muller) in einem nichttrocknenden Prüfbindemittel präpariert. Das Prüfbindemittel (Paste) besteht aus zwei Komponenten.

### Komponente 1:

Komponente 1 ist ein Alkydharz-Bindemittel auf Basis Leinöl und Phthalsäureanhydrid. Es entspricht den Spezifikationen, die in den Normen DIN EN ISO 787-24 (Oktober 1995), ISO 787-25:1993 und DIN 55983 (Dezember 1983) als Anforderungen an ein Prüfbindemittel für Farbpigmente genannt werden. Zur Anwendung kommt das Produkt ®SACOLYD L 640 (Krems Chemie), ehemals ®ALKYDAL L 64 (Bayer AG).

### Komponente 2:

Komponente 2 ist ein rheologisches Additiv, welches zum Erreichen eines thixotropen Verhaltens der Paste zugesetzt wird. Zur Anwendung kommt ein pulverförmiges, modifiziertes, hydriertes Rizinusöl, ®LUVOTHIX HT (Lehmann & Voss & Co.) in einer Konzentration von 5,0 %.

Das LUVOTHIX HT wird in dem SACOLYD L 640 bei 75 bis 95°C gelöst. Die abgekühlte, stichfeste Masse wird einmal über ein Dreiwalzwerk gegeben. Damit ist die Paste fertiggestellt.

Verwendet wird eine Teller-Farbenausreibmaschine (Muller), wie in DIN EN ISO 8780-5 (April 1995) beschrieben. Zur Anwendung kommt ein ENGELSMANN JEL 25/53 Muller mit einem wirksamen Tellerdurchmesser von 24 cm. Die Drehzahl des unteren Tellers beträgt ca. 75 min⁻¹. Durch Einhängen eines 2,5 kg Belastungsgewichtes auf den Belastungsbügel wird die Kraft zwischen den Tellern auf ca. 0,5 kN eingestellt. Es wird die oben angegebene Menge Pigment und 5,00 g Paste in drei Stufen zu je 25 Umdrehungen nach dem in DIN EN ISO 8780-5 (April 1995) Abschnitt 8.1 beschriebenen Verfahren dispergiert.

Anschließend wird die Pigment-Pasten-Mischung in einen Pastenteller eingestrichen, der in seiner Funktion dem Pastenteller in DIN 55983 (Dezember 1983) entspricht. Die zum Pastenteller gehörige Rakel wird über die mit der Pigment-Pasten-Mischung gefüllte Vertiefung des Tellers gezogen, so daß eine glatte Oberfläche entsteht. Die Rakel wird dabei in einer Richtung mit einer Geschwindigkeit von ca. 3 bis 7 cm/s bewegt. Die glatte Oberfläche wird innerhalb weniger Minuten gemessen.

### 2. Aufhellung (Farbstärke)

Das Pigment wird mit einer Teller-Farbenausreibmaschine (Muller) in einem nichttrocknenden Prüfbindemittel präpariert. Das Prüfbindemittel (Paste) besteht aus zwei Komponenten.

### Komponente 1:

Komponente 1 ist ein Alkydharz-Bindemittel auf Basis Leinöl und Phthalsäureanhydrid. Es entspricht den Spezifikationen, die in den Normen DIN EN ISO 787-24 (Oktober 1995), ISO 787-25:1993 und DIN 55983 (Dezember 1983) als Anforderungen an ein Prüfbindemittel für Farbpigmente genannt werden. Zur Anwendung kommt SACOLYD L 640.

### Komponente 2:

Komponente 2 ist ein rheologisches Additiv, welches zum Erreichen eines thixotropen Verhaltens der Paste zugesetzt wird. Zur Anwendung kommt ein pulverförmiges, modifiziertes, hydriertes Rizinusöl, LUVOTHIX HT in der Konzentration von 5,0 %.

Das LUVOTHIX HT wird in dem SACOLYD L 640 bei 75 bis 95°C gelöst. Die abgekühlte, stichfeste Masse wird einmal über ein Dreiwalzwerk gegeben. Damit ist die Paste fertiggestellt.

Verwendet wird eine Teller-Farbenausreibmaschine (Muller), wie in DIN EN ISO 8780-5 (April 1995) beschrieben. Zur Anwendung kommt ein ENGELSMANN JEL 25/53 Muller mit einem wirksamen Tellerdurchmesser von 24 cm. Die Drehzahl des unteren Tellers beträgt ca. 75 min⁻¹. Durch Einhängen eines 2,5 kg Belastungsgewichtes auf den Belastungsbügel wird die Kraft zwischen den Tellern auf ca. 0,5 kN eingestellt.

Als Aufhellmittel wird ein handelsübliches Titandioxidpigment, ®BAYERTITAN R-KB-2 (Bayer AG), verwendet. R-KB-2 entspricht in seiner Zusammensetzung dem Typ R 2 in ISO 591-1977. Wird statt R-KB-2 ein anderes R 2-Pigment verwendet, so können bei der Farbmessung abweichende CIELAB-Koordinaten erhalten werden.

Es werden 0,400 g Pigment, 2,000 g BAYERTITAN R-KB-2 und 3,00 g Paste in fünf Stufen zu je 25 Umdrehungen nach dem in DIN EN ISO 8780-5 (April 1995) Abschnitt 8.1 beschriebenen Verfahren dispergiert.

Anschließend wird die Pigment-Pasten-Mischung in einen Pastenteller eingestrichen, der in seiner Funktion dem Pastenteller in DIN 55983 (Dezember 1983) entspricht. Die zum Pastenteller gehörige Rakel wird über die mit der Pigment-Pasten-Mischung gefüllte Vertiefung des Tellers gezogen, so daß eine glatte Oberfläche entsteht. Die Rakel wird dabei in einer Richtung mit einer Geschwindigkeit von ca. 3 bis 7 cm/s bewegt. Die glatte Oberfläche wird innerhalb weniger Minuten gemessen.

### 3. Farbmeßgerät

Es wird ein Spektrophotometer ("Farbmeßgerät") mit der Meßgeometrie d/8 ohne Glanzfalle verwendet. Diese Meßgeometrie ist in ISO 7724/2-1984 (E)Punkt 4.1.1, in DIN 5033, Teil 7 (Juli 1983) Punkt 3.2.4 und in DIN 53236 (Januar 1983) Punkt 7.1.1 beschrieben.

Zur Anwendung kommt ein DATAFLASH 200 Meßgerät der Firma Datacolor International.

Das Farbmeßgerät wird gegen einen weißen, keramischen Arbeitsstandard, kalibriert, wie in ISO 7724/2-1984 (E)Punkt 8.3 beschrieben. Die Reflexionsdaten des Arbeitsstandards gegen einen ideal mattweißen Körper sind im Farbmeßgerät hinterlegt, so daß nach Kalibrierung mit dem weißen Arbeitsstandard alle Farbmessungen auf den ideal mattweißen Körper bezogen werden. Die Schwarzpunktkalibrierung wird mit einem schwarzen Hohlkörper des Farbmeßgeräteherstellers ausgeführt.

### 4. Farbmessung

Eine möglicherweise vorhandene Glanzfalle ist ausgeschaltet. Die Temperatur von Farbmeßgerät und Prüfling beträgt ca. 25°C ±5°C.

### 4.1 Messung des Lackaufstriches

Der Aufstrich wird so an das Farbmeßgerät gelegt, so daß die Meßöffnung eine mittlere Stelle der Lackschicht abdeckt. Der Aufstrich muß vollständig und plan anliegen. Die Meßöffnung muß vollständig von der Lackschicht bedeckt sein. Anschließend erfolgt die Messung.

### 4.2 Messung des Pastentellers

Die Farbmessung erfolgt unmittelbar nach dem Einstreichen in den Pastenteller. Der gefüllte Pastenteller wird so an das Farbmeßgerät gelegt, daß die Meßöffnung vollständig von der mit Paste bestrichenen Vertiefung des Tellers ausgefüllt ist. Der Teller muß vollständig und plan anliegen. Anschließend erfolgt die Messung.

### 5. Berechnung der CIE-Koordinaten

Die CIE 1976 (L*, a*, b*)-Koordinaten (kurz CIELAB) eines Reflexionsspektrums sind abhängig von den gewählten Randbedingungen bei der Messung und der Auswertung. Die angegebenen Daten für den Wellenlängenbereich von 400 nm bis 700 nm und das Intervall von 20 nm sind gültig für die zur Zeit eingesetzten Dataflash 2000 Farbmeßgeräte (Stand: 7/97).

Es werden nur die Koordinaten L*, a* und b* angegeben. Alle weiteren Größen sind redundant.

Aus dem gemessenen Reflexionsspektrum werden nach den Berechnungsanwiesungen in ASTM E 308-1985, Punkt 7 die CIE-Koordinaten L*, a* und b* von 1976 berechnet. Zur Verwendung kommen die Gewichtungsfunktionen der Normlichtart C und des 2°-Normalbeobachters von 1931 in ASTM E 308-1985, Table 5.6. Der Wellenlängenbereich liegt zwischen 400 nm und 700 nm. Das Wellenlängenintervall beträgt 20 nm. Es wird rechnerisch kein Glanz abgezogen. Die Ergebnisse L*, a* und b* werden auf ganze Zahlen gerundet.

Die CIE-Koordinaten werden in DIN 5033 Teil 3 (Juli 1992) Koordinaten des L*a*b*-Farbenraumes genannt. In ISO 7724/3-1984 wird die Abkürzung CIELAB-Farbraum eingeführt. Die Koordinaten sind dimensionslos.

### 6. Bestimmung des Chrom- und Mangangehalts

Die Bestimmung des Chrom- und Mangangehalts erfolgt durch ICP-MS. Die Nachweisgrenze der Bestimmungsmethode beträgt 10 µg/kg.

### 7. Bestimmung des Chloridgehalts

Die Bestimmung des Chloridgehalts erfolgt durch Ionenchromatographie.

Der Fachmann wird durch geeignete Variation der angegebenen Herstellungsbedingungen in der Lage sein, eine breite Palette von Eisenoxidrotpigmenten verschiedener Teilchengröße und somit verschiedener Farbtöne herzustellen.

Die Aufarbeitung der Pigmentsuspensionen erfolgt durch die bekannten Schritte Filtration, Trocknung und Mahlung.

Nachfolgend wird die Erfindung beispielhaft beschrieben, worin jedoch keinerlei Einschränkungen zu sehen sind.

### Beispiele

### Beispiel 1

### Herstellung von Eisenoxidgelb aus Eisen-II-chlorid

In einem Rührkessel mit Rührer, Begasungseinrichtung und Flüssigkeitsdosiereinrichtungen werden 54,72 Liter eines aus einer gemäß Beschreibung vorbereiteten Altsäure (Gemisch aus FeCl₂, HCl in Wasser, wie er beim Abbeizen von Stahlblechen anfällt) mit einem FeCl₂-Gehalt von 213,4 g/l und einem HCl-Gehalt von 10,3 g/l nach dem Fällverfahren bei 34°C hergestellten β-FeOOH-Keim (FeOOH-Gehalt: 39,78 g/l; FeCl₂-Gehalt: 65,94 g/l) und 113,61 1 der gleichen Altsäure gegeben. Diese Lösung wird auf 65°C aufgeheizt. Nach Erreichen von 65°C wird mit einer pH-Steigerungsrate von 4 pH-Einheiten pro Stunde solange Natronlauge eines Gehalt von 300 g/l zugepumpt, bis ein pH-Wert von 2,0 erreicht ist. Dann wird mit einer pH-Steigerungsrate von 0,05 pH-Einheiten pro Stunde solange Natronlauge einer Konzentration von 300 g/l zugepumpt, bis ein pH-Wert von 3,8 erreicht ist. Gleichzeitig werden bis zum Ende der Reaktion 100 Liter Lufter pro Stunde durch das Reaktionsgemisch geleitet. Bis zum Ende der Reaktion, das durch die Fällung des gesamten FeCl₂ und die Neutralisation der gesamten HCl bestimmt wird, wird dann weiter mit Natronlauge von 300 g/l der pH-Wert konstant gehalten.

Das erhaltene Endprodukt wird filtriert, gewaschen, getrocknet und desagglomeriert. Es ist nach der Desagglomeration unmittelbar zur Herstellung von Rotpigmenten durch Calcination geeignet.

Dieses Produkt hat folgende Eigenschaften:
Mn-Gehalt: 0,054 %, bezogen auf Pigment
Cl-Gehalt: 0,45 %, bezogen auf Pigment
Cr-Gehalt: 20 mg/kg, bezogen auf Pigment.

### Beispiel 2

### Herstellung von Eisenoxidschwarz aus Eisen-II-chlorid

In einem Rührkessel mit Rührer, Begasungseinrichtung und Flüssigkeitsdosiereinrichtungen werden 65,84 Liter Natronlauge mit einem Gehalt von 300 g/l NaOH gegeben und auf 90°C erwärmt. Zu dieser Natronlauge werden dann 155 Liter einer gemäß Beschreibung vorbereiteten Altsäure mit einem FeCl₂-Gehalt von 213,4 g/l und einem HCl-Gehalt von 10,3 g/l innerhalb von 80 Minuten zugepumpt. Anschließend werden 1,7 Nm³/h Luft durch die Reaktionsmischung durchgeleitet. Nach 230 Minuten ist die Reaktion beendet.
Der erhaltene Magnetit wird filtriert, gewaschen, getrocknet und desagglomeriert.

Dieses Produkt hat folgende Eigenschaften:
Mn-Gehalt: 0,056 %, bezogen auf Pigment
Cl-Gehalt: 0,60 %, bezogen auf Pigment
Cr-Gehalt 35 mg/kg Pigment

### Beispiel 3

### Calcination und Mahlung von aus FeCl₂ hergestelltem Eisenoxidgelb bei 600°C

100 g eines nach Beispiel 1 hergestellten Eisenoxidgelb werden in einem Kammerofen unter Durchleitung von 600 l/h Luft in einer Quarzgutschale in 141 Minuten auf 600°C aufgeheizt und anschließend aus dem Ofen genommen und auf Raumtemperatur abgekühlt.

Das erhaltene Produkt hat folgende Eigenschaften:
Messung der Farbstärke (Aufhellung mit Bayertitan R-KB2)

Absolutwerte:
- L* :: 60,1 CIELAB-Einheiten
- a* :: 27,6 CIELAB-Einheiten
- b* :: 24,0 CIELAB-Einheiten

### Messung des Purtons

Absolutwerte:
- L* :: 41,4 CIELAB-Einheiten
- a* :: 26,5 CIELAB-Einheiten
- b* :: 22,4 CIELAB-Einheiten

Mn-Gehalt: 0,037%, bezogen auf Pigment
Cl-Gehalt: 0,20 %, bezogen auf Pigment
Cr-Gehalt: 18 mg/kg, bezogen auf Pigment

### Beispiel 4

### Calcination und Mahlung von aus FeCl₂ hergestelltem Eisenoxidgelb bei 700°C

100 g eines nach Beispiel 1 hergestellten Eisenoxidgelb werden in einem Kammerofen unter Durchleitung von 600 l/h Luft in einer Quarzgutschale in 169 Minuten auf 700°C aufgeheizt und anschließend aus dem Ofen genommen und auf Raumtemperatur abgekühlt.

Das erhaltene Produkt hatte folgende Eigenschaften:
Messung der Farbstärke (Aufhellung mit Bayertitan R-KB2)

Absolutwerte:
- L* :: 59,9 CIELAB-Einheiten
- a* :: 27,9 CIELAB-Einheiten
- b* :: 20,9 CIELAB-Einheiten

### Messung des Purtons

Absolutwerte:
- L* :: 42,1 CIELAB-Einheiten
- a* :: 29,1 CIELAB-Einheiten
- b* :: 23,5 CIELAB-Einheiten

Mn-Gehalt: 0,037%, bezogen auf Pigment
Cl-Gehalt: 0,17%, bezogen auf Pigment
Cr-Gehalt: 17 mg/kg, bezogen auf Pigment

### Beispiel 5

### Calcination und Mahlung von aus FeCl₂ hergestelltem Eisenoxidgelb bei 900°C

100 g eines nach Beispiel 1 hergestellten Eisenoxidgelb werden in einem Kammerofen unter Durchleitung von 600 l/h Luft in einer Quarzgutschale in 218 Minuten auf 900°C aufgeheizt und anschließend aus dem Ofen genommen und auf Raumtemperatur abgekühlt.

Das erhaltene Produkt hatte folgende Eigenschaften:

### Messung der Farbstärke (Aufhellung mit Bayertitan R-KB2)

Absolutwerte:
- L* :: 59,8 CIELAB-Einheiten
- a* :: 25,1 CIELAB-Einheiten
- b* :: 12,3 CIELAB-Einheiten

### Messung des Purtons

Absolutwerte:
- L* :: 39,9 CIELAB-Einheiten
- a* :: 29,1 CIELAB-Einheiten
- b* :: 20,8 CIELAB-Einheiten

Mn-Gehalt: 0,037%, bezogen auf Pigment
Cl-Gehalt: 0,20%, bezogen auf Pigment
Cr-Gehalt: 17 mg/kg, bezogen auf Pigment

### Beispiel 6

### Calcination und Mahlung von aus FeCl₂ hergestelltem Eisenoxidgelb bei 1000°C

100 g eines nach Beispiel 1 hergestellten Eisenoxidgelb werden in einem Kammerofen unter Durchleitung von 600 l/h Luft in einer Quarzgutschale in 240 Minuten auf 1000°C aufgeheizt und anschließend aus dem Ofen genommen und auf Raumtemperatur abgekühlt.

Das erhaltene Produkt hatte folgende Eigenschaften:

### Messung der Farbstärke (Aufhellung mit Bayertitan R-KB2)

Absolutwerte:
- L* :: 63,6 CIELAB-Einheiten
- a* :: 18,3 CIELAB-Einheiten
- b* :: 4,2 CIELAB-Einheiten

### Messung des Purtons

Absolutwerte:
- L* :: 36,0 CIELAB-Einheiten
- a* :: 25,4 CIELAB-Einheiten
- b* :: 14,4 CIELAB-Einheiten

Mn-Gehalt: 0,037%, bezogen auf Pigment
Cl-Gehalt: 0,18%, bezogen auf Pigment
Cr-Gehalt 15 mg/kg, bezogen auf Pigment.

### Beispiel 7

### Calcination und Mahlung von aus FeCl₂ hergestelltem Eisenoxidschwarz bei 600°C

100 g eines nach Beispiel 2 hergestellten Eisenoxidschwarz werden in einem Kammerofen unter Durchleitung von 600 l/h Luft in einer Quarzgutschale in 141 Minuten auf 600°C aufgeheizt und anschließend aus dem Ofen genommen und auf Raumtemperatur abgekühlt.

Das erhaltene Produkt hatte folgende Eigenschaften:

### Messung der Farbstärke (Aufhellung mit Bayertitan R-KB2)

Absolutwerte:
- L* :: 61,5 CIELAB-Einheiten
- a* :: 28,1 CIELAB-Einheiten
- b* :: 21,2 CIELAB-Einheiten

### Messung des Purtons

Absolutwerte:
- L* :: 42,5 CIELAB-Einheiten
- a* :: 29,4 CIELAB-Einheiten
- b* :: 22,9 CIELAB-Einheiten

Mn-Gehalt: 0,042%, bezogen auf Pigment
Cl-Gehalt: 0,35 Gew.-% bezogen auf Pigment
Cr-Gehalt: 30 mg/kg, bezogen auf Pigment.

Die Bestimmung dieser Eigenschaften erfolgte wie oben angegeben.

## Patentansprüche

1. Eisenoxidrotpigmente mit einer Helligkeit L* (im Purton) von 36,0 bis 44,0 CIELAB-Einheiten, einem a*-Wert von 24 bis 30 CIELAB-Einheiten und einem b*-Wert von 14 bis 26 CIELAB-Einheiten und mit einer Helligkeit L* (in der Aufhellung) von 59 bis 66 CIELAB-Einheiten und einem a*-Wert von 18 bis 30 CIELAB-Einheiten und einem b*-Wert von 4 bis 26 CIELAB-Einheiten und mit einem Mn-Gehalt von 0,012 bis 0,12 Gew.-%, bezogen auf Pigment, einem Chlorid-Gehalt von 0,05 bis 0,59 Gew.-%, bezogen auf Pigment, und einem Chrom-Gehalt von kleiner 40 mg/kg Pigment.

2. Verfahren zur Herstellung von Eisenoxidrotpigmenten durch Kalzination von Eisenoxidgelbpigmenten bei Temperaturen von 350 bis 1000°C, bevorzugt von 600 bis 900°C, in Gegenwart eines sauerstoffhaltigen Gases und gegebenenfalls durch anschließende Mahlung, **dadurch gekennzeichnet, daß** das Eisenoxidgelbpigment folgendermaßen hergestellt wurde, daß
a) zu einer sauren Fe-II-chloridlösung mit einem FeCl₂-Gehalt von 50 bis 450 g/l eine alkalische Komponente unter intensivem Rühren in einer Menge zugegeben wird, die ausreicht, um den pH-Wert der Lösung zwischen 3 und 5 einzustellen,
b) gegebenenfalls zusätzlich ein Flockungshilfsmittel vor oder nach der Zugabe der alkalischen Komponente oder gemeinsam mit der alkalischen Komponente der Lösung zugegeben wird,
c) gegebenenfalls nach der Zugabe der alkalischen Komponente und des gegebenenfalls zugesetzten Flockungshilfsmittels oxidiert wird,
d) der nach der Behandlung unter a) bis c) anfallende Feststoff von der Lösung abgetrennt wird,
e) die unter d) angefallene Lösung zu einer nach dem Fällverfahren hergestellten α-FeOOH-Keimsuspension zugegeben wird und zwar in einer Menge, die der 4- bis 8-fachen molaren Menge an Eisen der gesamten Keimsuspension (also Eisen aus Eisenoxidhydroxid und Eisen aus nicht umgesetzter Eisenverbindung) entspricht,
f) die unter e) angefallene Suspension auf eine Temperatur von 30 bis 95°C, bevorzugt von 30 bis 85°C, besonders bevorzugt von 55 bis 75°C, unter guter Durchmischung aufgeheizt wird,
g) anschließend mit einem Oxidationsmittel oxidiert wird, wobei das Oxidationsmittel so zugegeben wird, daß 0,5 bis 10 mol-% Eisen pro Stunde, bevorzugt 0,5 bis 2,0 mol-% Eisen pro Stunde, oxidiert werden und gleichzeitig der pH-Wert mit einer alkalischen Komponente mit einer Geschwindigkeit von 0,01 bis 0,4 pH-Werteinheiten/Stunde auf einem End-pH-Wert von 3,0 bis 5,0 erhöht wird,
h) gegebenenfalls bei konstantem pH-Wert zwischen 3,0 und 5,0 weiter oxidiert wird,
i) die Oxidation beendet wird, sobald der Fe-II-Gehalt der Suspension kleiner als 1 mol-% ist,
j) abschließend der Feststoff aus i) abgetrennt, gewaschen, getrocknet und gemahlen wird.

3. Verfahren zur Herstellung von Eisenoxidrotpigmenten durch Kalzination von Eisenoxidschwarzpigmenten bei Temperaturen von 350 bis 1000°C, bevorzugt von 600 bis 900°C, in Gegenwart eines sauerstoffhaltigen Gases und gegebenenfalls durch anschließende Mahlung, **dadurch gekennzeichnet, daß** das Eisenoxidschwarzpigment folgendermaßen hergestellt wurde, daß
a) zu einer sauren Fe-II-chloridlösung mit einem FeCl₂-Gehalt von 50 bis 450 g/l eine alkalische Komponente unter intensivem Rühren in einer Menge zugegeben wird, die ausreicht, um den pH-Wert der Lösung zwischen 3 und 5 einzustellen,
b) gegebenenfalls zusätzlich ein Flockungshilfsmittel vor oder nach der Zugabe der alkalischen Komponente oder gemeinsam mit der alkalischen Komponente der Lösung zugegeben wird,
c) gegebenenfalls nach der Zugabe der alkalischen Komponente und des gegebenenfalls zugesetzten Flockungshilfsmittels oxidiert wird,
d) der nach der Behandlung unter a) bis c) anfallende Feststoff von der Lösung abgetrennt wird,
e) die unter d) angefallene Lösung zu einer Lösung, die ein alkalisch reagierendes Fällungsmittel enthält, bei einer Temperatur von 50 bis 95°C, in einer Menge zugegeben wird, so daß das Äquivalentverhältnis von Eisen-II zu Fällungsmittel 0,5 bis 0,65, bevorzugt 0,5 bis 0,58, beträgt,
f) anschließend mit einem Oxidationsmittel oxidiert wird,
g) die Oxidation beendet wird, sobald der Fe-II-Gehalt der unter f) erhaltenen Suspension kleiner als 1 mol-% ist,
h) anschließend der Feststoff aus g) abgetrennt, gewaschen und getrocknet wird.

4. Verfahren gemäß Anspruch 2, **dadurch gekennzeichnet, daß** als alkalische Komponente Natronlauge, Natriumcarbonat, Magnesiumcarbonat, Magnesiumoxid, Magnesiumhydroxid, Kalziumoxid, Kalziumhydroxid oder Ammoniak eingesetzt werden.

5. Verfahren gemäß Anspruch 3, **dadurch gekennzeichnet, daß** als alkalisch reagierendes Fällungsmittel Natronlauge, Natriumcarbonat, Magnesiumcarbonat, Magnesiumoxid, Magnesiumhydroxid, Kalziumoxid, Kalziumhydroxid oder Ammoniak eingesetzt werden.

6. Verwendung der Eisenoxidrotpigmente gemäß Anspruch 1 oder der nach dem Verfahren gemäß den Ansprüchen 2 bis 5 hergestellten Eisenoxidrotpigmente zur Einfärbung von Baustoffen.

7. Verwendung der Eisenoxidrotpigmente gemäß Anspruch 1 oder der nach dem Verfahren gemäß den Ansprüchen 2 bis 5 hergestellten Eisenoxidrotpigmente zur Einfärbung von Kunststoffen oder Papier.

8. Verwendung der Eisenoxidrotpigmente gemäß Anspruch 1 oder der nach dem Verfahren gemäß den Ansprüchen 2 bis 5 hergestellten Eisenoxidrotpigmente zur Herstellung von Farben oder Lacken.

9. Verwendung der Eisenoxidrotpigmente gemäß Anspruch 1 oder der nach dem Verfahren gemäß den Ansprüchen 2 bis 5 hergestellten Eisenoxidrotpigmente zur Herstellung von Farbmittelzubereitungen und zur Herstellung von Farbmitteln für die Lebensmittelindustrie.

## Claims

1. Iron oxide red pigments with a lightness L* (full shade) of 36.0 to 44.0 CIELAB units, an a* value of 24 to 30 CIELAB units and a b* value of 14 to 26 CIELAB units and with a lightness L* (with brightening) of 59 to 66 CIELAB units and an a* value of 18 to 30 CIELAB units and a b* value of 4 to 26 CIELAB units and with an Mn content of 0.012 to 0.12 wt.%, based on pigment, a chloride content of 0.05 to 0.59 wt.%, based on pigment, and a chromium content of less than 40 mg/kg pigment.

2. Process for the production of iron oxide red pigments by calcining iron oxide yellow pigments at temperatures of 350 to 1000°C, preferably of 600 to 900°C, in the presence of an oxygen-containing gas and optionally by subsequent grinding, **characterised in that** the iron oxide yellow pigment was produced as follows, **in that**
a) an alkaline component is added to an acidic Fe(II) chloride solution with an FeCl₂ content of 50 to 450 g/l, stirring intensively, in a quantity sufficient to adjust the pH of the solution to between 3 and 5,
b) a flocculation aid is optionally also added to the solution before or after adding the alkaline component or together with the alkaline component,
c) oxidation is optionally carried out after adding the alkaline component and the optional flocculation aid,
d) the solid formed after the treatment in a) to c) is separated from the solution,
e) the solution formed in d) is added to an α-FeOOH seed suspension produced by the precipitation process, in a quantity corresponding to 4 to 8 times the molar quantity of iron in the seed suspension overall (i.e. iron from iron oxide hydroxide and iron from unreacted iron compound),
f) the suspension formed in e) is heated to a temperature of 30 to 95°C, preferably of 30 to 85°C, particularly preferably of 55 to 75°C, mixing thoroughly,
g) oxidation is then carried out using an oxidising agent, the oxidising agent being added such that 0.5 to 10 mole % iron per hour, preferably 0.5 to 2.0 mole % iron per hour, is oxidised and at the same time the pH is increased, using an alkaline component, at a rate of 0.01 to 0.4 pH units/hour to a final pH of 3.0 to 5.0,
h) oxidation is optionally continued at a constant pH of between 3.0 and 5.0,
i) oxidation is stopped as soon as the Fe(II) content of the suspension is less than 1 mole %,
j) the solid from i) is finally separated off, washed, dried and ground.

3. Process for the production of iron oxide red pigments by calcining iron oxide black pigments at temperatures of 350 to 1000°C, preferably of 600 to 900°C, in the presence of an oxygen-containing gas and optionally by subsequent grinding, **characterised in that** the iron oxide black pigment was produced as follows, **in that**
a) an alkaline component is added to an acidic Fe(II) chloride solution with an FeCl₂ content of 50 to 450 g/l, stirring intensively, in a quantity sufficient to adjust the pH of the solution to between 3 and 5,
b) a flocculation aid is optionally also added to the solution before or after adding the alkaline component or together with the alkaline component,
c) oxidation is optionally carried out after adding the alkaline component and the optional flocculation aid,
d) the solid formed after the treatment in a) to c) is separated from the solution,
e) the solution formed in d) is added to a solution which contains a precipitant reacting as an alkali, at a temperature of 50 to 95°C, in a quantity such that the equivalent ratio of iron(II) to precipitant is 0.5 to 0.65, preferably 0.5 to 0.58,
f) oxidation is then carried out using an oxidising agent,
g) oxidation is stopped as soon as the Fe(II) content of the suspension obtained in f) is less than 1 mole %,
h) the solid from g) is then separated off, washed and dried.

4. Process according to claim 2, **characterised in that** sodium hydroxide, sodium carbonate, magnesium carbonate, magnesium oxide, magnesium hydroxide, calcium oxide, calcium hydroxide or ammonia is used as the alkaline component.

5. Process according to claim 3, **characterised in that** sodium hydroxide, sodium carbonate, magnesium carbonate, magnesium oxide, magnesium hydroxide, calcium oxide, calcium hydroxide or ammonia is used as the precipitant reacting as an alkali.

6. Use of the iron oxide red pigments according to claim 1 or of the iron oxide red pigments produced by the process according to claims 2 to 5 for colouring building materials.

7. Use of the iron oxide red pigments according to claim 1 or of the iron oxide red pigments produced by the process according to claims 2 to 5 for colouring plastics or paper.

8. Use of the iron oxide red pigments according to claim 1 or of the iron oxide red pigments produced by the process according to claims 2 to 5 for the production of paints or lacquers.

9. Use of the iron oxide red pigments according to claim 1 or of the iron oxide red pigments produced by the process according to claims 2 to 5 for the production of colorant preparations and for the production of colorants for the foodstuffs industry.

## Revendications

1. Oxydes de fer pigmentaires rouges présentant un éclaircissement L* (dans le ton pur) de 36,0 à 44,0 unités CIELAB, une valeur a* de 24 à 30 unités CIELAB et une valeur b* de 14 à 26 unités CIELAB et un éclaircissement L* (sur ton éclairci) de 59 à 66 unités CIELAB, une valeur a* de 18 à 30 unités CIELAB et une valeur b* de 4 à 26 unités CIELAB, avec une teneur en Mn de 0,012 à 0,12 % du poids du pigment, une teneur en chlorure de 0,05 à 0,59 % du poids du pigment et une teneur en chrome inférieure à 40 mg/kg du pigment.

2. Procédé pour la préparation d'oxydes de fer pigmentaires rouges par calcination d'oxydes de fer pigmentaires jaunes à des températures de 350 à 1000°C, de préférence de 600 à 900°C, en présence d'un gaz contenant de l'oxygène, la calcination étant suivie le cas échéant d'un broyage, ce procédé se caractérisant en ce que l'oxyde de fer pigmentaire jaune a été préparé de la manière suivante :
a) à une solution acide de chlorure de fer-II, à une teneur en FeCl₂ de 50 à 450 g/l, on ajoute un composant alcalin sous agitation énergique en quantité suffisante pour régler le pH de la solution entre 3 et 5,
b) le cas échéant, avant ou après l'addition du composant alcalin ou en même temps que le composant alcalin, on ajoute en outre à la solution un produit auxiliaire floculant,
c) le cas échéant, après l'addition du composant alcalin et du produit auxiliaire floculant éventuel, on oxyde,
d) on sépare la matière solide obtenue après les traitements a) à c) de la solution,
e) on ajoute la solution obtenue en d) à une suspension de germes d'α-FeOOH préparée par précipitation, en quantité correspondant à 4 à 8 fois la quantité molaire de fer de la suspension de germes totale (c'est-à-dire le fer de l'oxyde basique de fer et le fer du dérivé du fer non converti),
f) on chauffe la suspension obtenue en e) sous mélange soigné à une température de 30 à 95°C, de préférence de 30 à 85°C et plus spécialement de 55 à 75°C,
g) on oxyde ensuite à l'aide d'un agent oxydant ajouté en quantité telle que 0,5 à 10 mol %, de préférence 0,5 à 2,0 mol % de fer soient oxydées par heure, et simultanément, on accroît le pH à l'aide d'un composant alcalin à une vitesse de 0,01 à 0,4 unité de pH par heure, jusqu'à un pH final de 3,0 à 5,0,
h) le cas échéant, on poursuit l'oxydation à pH constant entre 3,0 et 5,0,
i) on arrête l'oxydation dès que la teneur en fer-II de la suspension est inférieure à 1 mol %,
j) on sépare pour terminer la matière solide obtenue en i), on la lave, on la sèche et on la broie.

3. Procédé pour la préparation d'oxydes de fer pigmentaires rouges par calcination d'oxydes de fer pigmentaires noirs à des températures de 350 à 1000°C, de préférence de 600 à 900°C, en présence d'un gaz contenant de l'oxygène, la calcination étant le cas échéant suivie d'un broyage, le procédé se caractérisant en ce que l'oxyde de fer pigmentaire noir a été préparé de la manière suivante :
a) à une solution acide de chlorure de fer-II à une teneur en FeCl₂ de 50 à 450 g/l, on ajoute sous agitation énergique un composant alcalin en quantité suffisante pour régler le pH de la solution entre 3 et 5,
b) le cas échéant, avant ou après l'addition du composant alcalin ou en même temps que cette addition, on ajoute à la solution en outre un produit auxiliaire floculant,
c) le cas échéant, après l'addition du composant alcalin et du produit auxiliaire floculant éventuel, on oxyde,
d) on sépare la matière solide obtenue après les traitements a) à c) de la solution,
e) on ajoute la solution obtenue en d) à une solution contenant un agent précipitant à réaction alcaline, à une température de 50 à 95°C, en quantité correspondant à un rapport de 0,5 à 0,65, de préférence de 0,5 à 0,58 entre les équivalents de fer-II et les équivalents de l'agent précipitant,
f) on oxyde ensuite à l'aide d'un agent oxydant,
g) on arrête l'oxydation dès que la teneur en fer-II de la suspension obtenue en f) est inférieure à 1 mol %,
h) on sépare ensuite la matière solide formée en g), on la lave et on la sèche.

4. Procédé selon la revendication 2, **caractérisé en ce que** le composant alcalin utilisé est la lessive de soude, le carbonate de sodium, le carbonate de magnésium, la magnésie, l'hydroxyde de magnésium, l'oxyde de calcium, l'hydroxyde de calcium ou l'ammoniac.

5. Procédé selon la revendication 3, **caractérisé en ce que** l'agent précipitant à réaction alcaline utilisé est la lessive de soude, le carbonate de sodium, le carbonate de magnésium, la magnésie, l'hydroxyde de magnésium, l'oxyde de calcium, l'hydroxyde de calcium ou l'ammoniac.

6. Utilisation des oxydes de fer pigmentaires rouges selon la revendication 1 ou des oxydes de fer pigmentaires rouges préparés par le procédé selon les revendications 2 à 5 pour la coloration de matériaux du bâtiment.

7. Utilisation des oxydes de fer pigmentaires rouges selon la revendication 1 ou des oxydes de fer pigmentaires rouges préparés par le procédé selon les revendications 2 à 5 pour la coloration des résines synthétiques ou du papier.

8. Utilisation des oxydes de fer pigmentaires rouges selon la revendication 1 ou des oxydes de fer pigmentaires rouges préparés par le procédé selon les revendications 2 à 5 pour la préparation d'encres ou de peintures.

9. Utilisation des oxydes de fer pigmentaires rouges selon la revendication 1 ou des oxydes de fer pigmentaires rouges préparés par le procédé selon les revendications 2 à 5 pour la préparation de compositions tinctoriales et pour la préparation de colorants pour l'industrie alimentaire.
